Europäisches Patentamt

European Patent Office

Office européen des brevets

(11) Publication number: **0 091 742**
A2

# EUROPEAN PATENT APPLICATION

(21) Application number: 83301555.5

(22) Date of filing: 21.03.83

(51) Int. Cl.³: **A 61 C 13/20**

(30) Priority: 22.03.82 US 360151

(43) Date of publication of application:
19.10.83 Bulletin 83/42

(84) Designated Contracting States:
DE FR GB

(71) Applicant: Howmedica Inc.
235 East 42nd Street
New York New York 10017(US)

(72) Inventor: Myerson, Richard Louis
River Road
Essex Connecticut(US)

(74) Representative: Graham, Philip Colin Christison et al,
Pfizer Limited Ramsgate Road
Sandwich, Kent CT13 9NJ(GB)

(54) Dental pressure furnace.

(57) A pressure furnace, useful for firing porcelain dental prosthetic devices, is disclosed in which porcelain pieces can be moved from a pressurized heating zone into a cooling zone and rapidly cooled without change in pressure.

EP 0 091 742 A2

-1-

P.C. 6504

## DENTAL PRESSURE FURNACE

This invention is concerned with the manufacture of porcelain dental prosthetic devices. More specifically, it discloses a pressure furnace whereby porcelain pieces can be fired under elevated pressure to produce porcelain pieces with very low porosity and to minimize changes in glass structure due to long exposures to an elevated temperature.

The modern manufacture of porcelain dental prosthetic devices other than artificial teeth usually requires multiple firings in order to produce the desired smooth surface, dense texture, low porosity and the appropriate shading and blending required for satisfactory aesthetics. In the case of porcelain fused to metal the first firing is often designed to apply an opaque material to mask the metal color. The next firing is designed to apply the body or dentine simulating portion of the restoration and this may comprise more than one firing. Subsequent firings include the application of an incisal or enamel simulating material, stains and glazes. The final firings complete the fusion and result on cooling in the characteristic smooth surface texture of dental porcelain

R. F. Vines et al in the article "Mechanisms Involved in Securing Dense, Vitrified Ceramics from Pre-Shaped Partly Crystalline Bodies", J. Am. Ceramic Soc., 41 (8), 304-309 (August 1958) discuss causes of porosity and the problems of producing good quality low porosity porcelain. They evaluated firing techniques and recommended firing under vacuum and cooling under elevated pressure for dental porcelains. Howevever, they did not disclose any apparatus for accomplishing this. Specifically, they did not disclose any means for firing and cooling the porcelain pieces while maintaining pressure, without also cooling the furnace.

A method of firing porcelain with subsequent cooling under elevated pressure is disclosed in U.S. Patent No. 2,724,166. While this method produces a satisfactory product for dental porcelains not sensitive to long heat cycles such as porcelain artificial teeth, it requires cooling the furnace along with the porcelain pieces. This requirement extends the cooling cycle and calls for extra energy to reheat the furnace for the following batch. These disadvantages are largely overcome by the method of U.S. Patent No. 3,427,293. In this method, a second firing is also done under pressure but at a relatively low temperature for a relatively long time period. At the end of firing, pressure is vented from the furnace and the porcelain quickly removed for rapid cooling at atmospheric pressure. At these relatively low fusion temperatures, the viscosity of the porcelain is quite high. Consequently, trapped gas bubbles, made very small by pressure firing, cannot expand fast enough in this viscous matrix to reach objectionable size before rapid cooling solidifies the porcelain. Thus, pore causing bubbles are held to a small but not minimum size. It gives a generally satisfactory product for porcelains not sensitive to long heat cycles such as porcelain artificial teeth. However, it cannot result in the minimum porosity, and many dental porcelains used for porcelain/metal bridgework are very sensitive to exposure to high temperatures for an extended period of time.

The present invention provides an improved pressure furnace for the manufacture of porcelain dental prosthetic devices of high density and very low porosity. This furnace can also be operated to minimize the change in morphology of porcelain structure in high temperature sensitive systems. The pressure furnace includes a heating zone created by a muffle furnace, and an unheated cooling zone, both of which can be operated at elevated pressure. There is provision for rapidly moving the porcelain pieces between the two zones without change in pressure.

At the end of a firing under pressure, the porcelain pieces are removed from the heating zone to the cooling zone where, away from the radiant heat of the heating zone, they cool rapidly. Since the elevated firing pressure is maintained during removal and cooling, there is no possibility for any remaining compressed bubbles to expand and create objectionable porosity.

In this furnace, the heating zone does not have to be cooled when the porcelain pieces are cooled. Therefore, two savings are made : total firing cycle time is reduced because cooling is more rapid and no time is needed to reheat the furnace; energy is saved because the furnace need only be maintained at temperature, not cooled and reheated before the next batch. Further, the time of exposure of sensitive porcelains to high temperatures can be controlled.

Thus it is an object of this invention to provide a pressure furnace in which porcelain dental prostheses can be produced by being fired and rapidly cooled while maintaining an elevated pressure.

It is a further object of this invention to provide a pressure furnace in which porcelain dental prostheses can be fired and cooled under pressure without the necessity of cooling the heating zone.

A still further objective is to provide the capability of operating part of the heating cycle at atmospheric pressure and/or vacuum, and then elevating to high pressure.

## Brief Description of the Drawings

Figure 1 is an elevation section view of a pressure furnace, according to a preferred aspect of this invention, shown in position for firing.

Figure 2 is a partial view of the Figure 1 furnace shown in position for cooling.

Figure 3 is a cross-section view of the furnace taken at line 3-3 of Figure 1, showing a shutter mechanism, useful to block thermal radiation from escaping the muffle furnace when the furnace door is open, with the shutters open.

Figure 4 is a cross-section of the furnace taken at line 4-4 of Figure 2, showing the shutter mechanism of Figure 3, but with shutters closed.

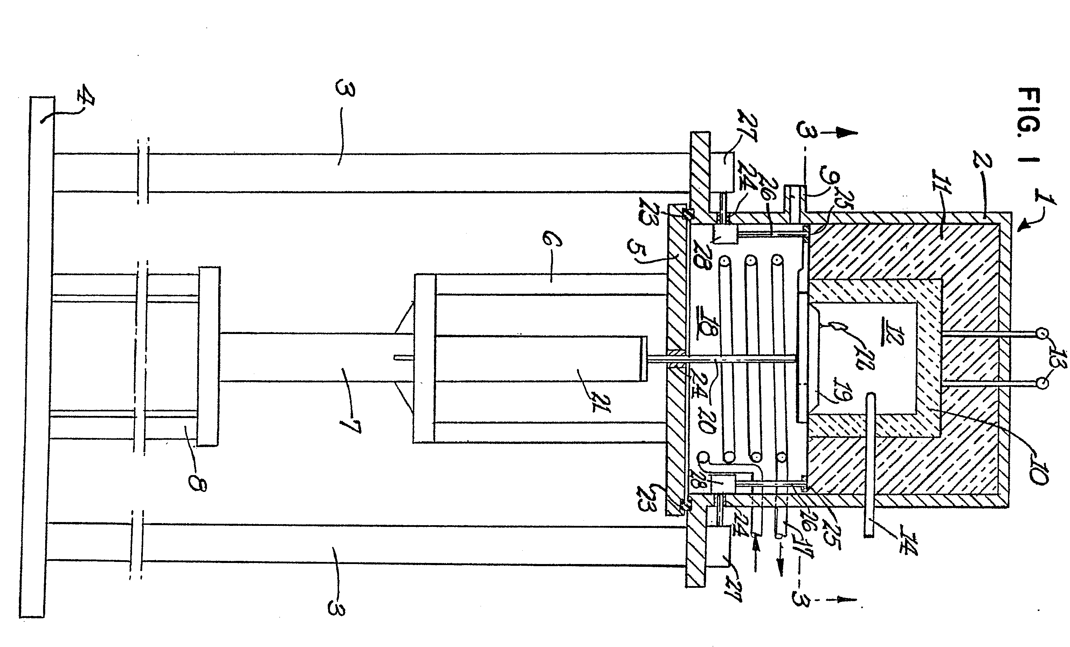

A pressure furnace according to a preferred embodiment of this invention is shown in vertical cross section as Figure 1. Similarly, a furnace operated with a horizontal axis with minor modifications can be designed. The pressure furnace 1 has a pressure shell 2 formed by cylindrical walls with one end closed. This shell is mounted, with axis vertical and closed end up, on four legs 3 supported by base 4. The open end of pressure shell 2 is closed by pressure door 5. The pressure door can be sealed against the pressure shell by O-ring gasket 23. The pressure door is supported by yoke 6, attached to piston rod 7, which can be moved up or down vertically by the action of a fluid activated, preferably hydraulic, cylinder 8. Cylinder 8 is mounted on base 4. The up and down movement of pressure door 5 permits shell 2 to be opened for charging and removing porcelain pieces, or closed for firing and cooling operations.

Pressure shell 2 contains port 9. Port 9 is the means for pressurizing shell 2 by admitting compressed air, and for reducing that pressure by removing air, as by venting or by evacuation. The ancillary air compression, evacuation and control means are not shown.

An electrically heated muffle furnace 10 is placed in the upper, closed end of pressure shell 2, oriented with its door opening facing vertically down. Muffle furnace 10 is thermally insulated from the shell 2 by insulation 11. The interior of muffle furnace 10 creates a heating zone 12. Electrical connections 13 and thermocouple 14 pass through pressure tight seals in shell 2 to power and control muffle furnace 10.

The downwardly facing opening of the muffle furnace is closable by furnace door 19. The furnace door is supported and moved vertically up and down by piston rod 20, which is actuated through pressure seal 24 by a fluid activated, preferably air, cylinder 21. Cylinder 21 is mounted on yoke 6 and is moved up and down with it by hydraulic cylinder 8. Furnace door 19 has two functions. It acts first as a door to open and close the muffle furnace opening, and second as a work stage to support on its upper surface the porcelain pieces 22 (only one illustrated) to be processed. Furnace door 19 is made of refractory material as in conventional muffle furnace door construction.

The furnace door 19, in its full up position, closes the muffle furnace and holds porcelain pieces in the heating zone for firing. The furnace door is effective in thermally separating heating zone 12 from cooling zone 18, but it does not seal against pressure differences between those two zones. Thus, the heating and cooling zones are always at essentially the same pressure.

The lower portion of the pressure shell is not directly heated by the muffle furnace, and constitutes a cooling zone 18. To insure rapid cooling of fired porcelain pieces when the furnace door is lowered, the cooling zone 18 is shielded against thermal radiation from within the muffle furnace by refractory shutters 25. The cooling zone also contains cooling coil 15. Cooling coil 15 is served by cooling water inlet 16 and outlet 17 sealed through shell 2.

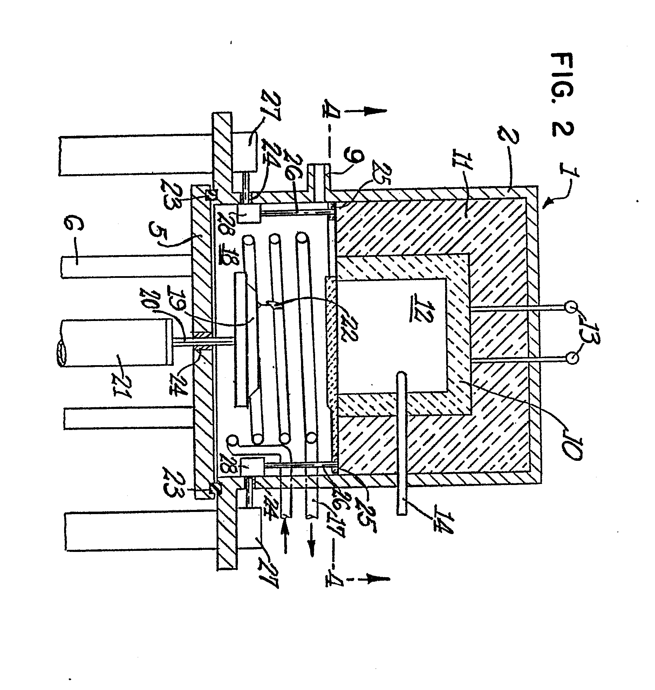

Figure 2 shows key elements of the pressure furnace when fired porcelain pieces are being cooled. Furnace door 19 has been lowered by cylinder 21 so that porcelain pieces 22 are withdrawn from heating zone 12. Shutters 25 have been pivoted to the closed position to block thermal radiation from the furnace. Cooling water is circulated in coil 15. In this mode, the porcelain products are cooled rapidly, but the muffle furnace is not cooled. Also, there is no change in pressure when moving the porcelain pieces from heating to cooling zone.

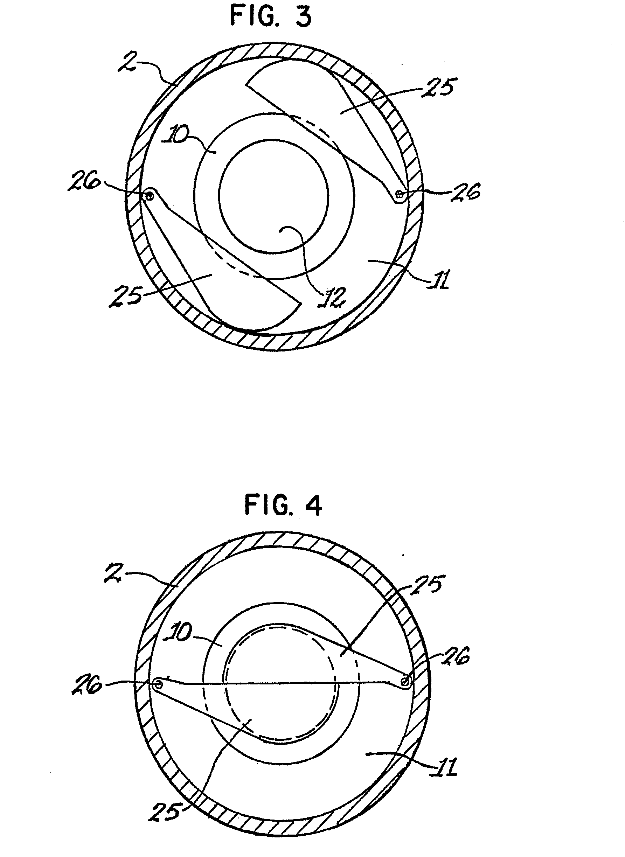

The operation of refractory shutters 25 is indicated by Figures 3 and 4. Figure 3 is a cross-section view, looking vertically up into the muffle furnace from the cooling zone, with shutters 25 in the open position. In this position, shutters 25 permit furnace door 19 (not shown) to close the bottom opening of the muffle furnace and hold the porcelain pieces in place for firing. When rapid cooling of the porcelain is desired, the furnace door is lowered, as shown in Figure 2, and shutters 25 are pivoted into closed position as shown in Figure 4. These shutters can only be closed when the furnace door is lowered. The shutters are pivoted by motors 27 through shafts 26 and gear boxes 28. In closed position, shutters 25 shield the cooling zone from direct muffle furnace radiation and act as a door to maintain furnace temperature. Shutters 25 are made of refractory material as used in conventional muffle furnace door construction, to withstand furnace temperatures while insulating the cooling zone. Two shutters 25 are shown in Figures 3 and 4, but three or more may be used and other arrangements may be advantageous in some circumstances.

A preferred embodiment of this pressure furnace for firing porcelain dental prostheses would have a pressure shell inside diameter of about 6 in. and designed for about 200 psig. internal air pressure. The hydraulic cylinder moving the pressure door would be sized about 2 in. diameter with 4 in. stroke. The hydraulic pressure applied must create a closing force that exceeds the opening force on the pressure door 5 by the internal air pressure. The air cylinder for moving the furnace door relative to the pressure door would be sized about 1 in. diameter with 3 in. stroke. The furnace would contain both cooling coil and insulating shutters for maximum versatility in cooling the fired porcelain.

A typical operating cycle would start with the muffle furnace 10 preheated to a desired temperature, typically about 760°C, shutters 25 would be in closed position, cooling water flowing in coil 15, and furnace door 19 lowered as in Figure 2. Pressure door 5 is lowered by hydraulic cylinder 8 to give access to the upper surface of furnace door 19 for positioning and supporting porcelain pieces to be fired. The porcelain is moved into the muffle furnace to start the firing by raising pressure door 5 to seal by means of O-ring gasket 23 against shell 2, opening shutters 25, and raising furnace door 19 into position against the bottom of the muffle furnace. At this point, the muffle furnace temperature is raised at about 24°C/min. to a final firing temperature of the dental porcelains -- usually in the range from 980°C to 1300°C, depending on whether low, medium or high fusion dental porcelains are being used.

When it is desired during the cycle, the pressure within shell 2, and thus in both the heating and cooling zones, can be increased by admitting compressed air through port 9. An air pressure of 150 psig may be used. In some cases, there may be advantages in using gases other than air to pressurize the furnace during firing. In other cases, if desired, the furnace can be operated at times during the cycle at atmospheric pressure, or under reduced pressure by evacuating shell 2 through port 9.

When the firing is finished and the porcelain is to be cooled, the furnace contains air under high pressure. To achieve the full benefit of this invention, the porcelain pieces must be removed from the furnace into the cooling zone and solidified without decrease in pressure. Furnace door 19, carrying the porcelain with it, is lowered by air cylinder 21 into the cooling zone. When most rapid cooling is desired, shutters 25 are closed and cooling water (or other cooling fluid) is circulated in coil 15. Where less rapid cooling is required, use of one or both of the shutters and cooling coil can be omitted. When the porcelain has been cooled to the point where it is solid enough to freeze any remaining bubbles at their smallest size, the pressure can be relieved by venting through port 9. Then, pressure door 5 is lowered giving access to the porcelain pieces for removal.

While the preferred embodiment has been described in which the porcelain pieces are moved vertically relative to a stationary muffle furnace within a pressure shell, many modifications in design can be made without departure from the spirit and scope of the invention. For example: it is possible to have the furnace move and the porcelain remain stationary; the porcelain pieces may be moved horizontally; the pressure door closing the shell can be hinged and locked mechanically; the furnace door and the porcelain pieces may also be moved manually via a probe rod entering through a seal in the pressure door. Consequently, the scope of this invention is not to be limited by the description of the embodiments discussed above, but only by the appended claims.

## CLAIMS

1. A pressure furnace useful for making porcelain dental prosthetic devices comprising an electrically heated muffle furnace (10) enclosed in a pressure shell (2), means for changing the pressure within said shell by admitting and removing gas, and means for opening said shell to introduce and remove said porcelain dental devices, characterized by said muffle furnace having an opening into an unheated space (18) within said shell, said unheated space being isobaric with said muffle furnace, and means for moving porcelain dental devices between said muffle furnace and said unheated space while maintaining pressure within said shell.

2. A pressure furnace as in claim 1 wherein said muffle furnace (10) is provided with a door (19) moveable within said unheated space (18) from a first position away from said muffle furnace opening to a second position closing said muffle furnace opening, and said door has porcelain dental prosthetic device holding means on the side facing into said muffle furnace whereby said porcelain devices can be moved between a cooling position in said unheated space and a firing position in said muffle furnace.

3. A pressure furnace as claimed in claim 2, additionally characterized by means for blocking thermal radiation from within said muffle furnace (10) from entering said unheated space (18) when said porcelain dental devices have been moved into said unheated space.

4.  A pressure furnace as claimed in claim 3 wherein the means for blocking thermal radiation comprises at least two refractory shutters (25) pivotable from a first open position to a second closed position when said door (19) has been moved away from said muffle furnace opening, said shutters in said open position being clear of the muffle furnace opening and in said closed position effectively closing said muffle furnace opening.

5.  A pressure furnace as claimed in any of claims 2 to 4, wherein said shell opening means comprises a pressure door (5) mounted on the piston (7) of a first fluid actuated cylinder (8) for movement to and from said shell, said first fluid actuated cylinder being mounted outside of said pressure shell, and said muffle furnace door (19) is mounted on the piston (20) of a second fluid actuated cylinder (21) for movement to and from said muffle furnace, said second fluid actuated cylinder (21) being mounted outside said shell on the piston (7) of said first fluid actuated cylinder (8) and the piston (20) of said second fluid actuated cylinder piston (21) being slidingly sealed through said pressure door (5) to move said furnace door (19) axially relative to said shell opening means.

6.  A pressure furnace as claimed in any preceding claim wherein said unheated space contains a fluid cooled heat transfer surface.

1/3

FIG. 1

FIG. 2

## FIG. 3

## FIG. 4